(19) Europäisches Patentamt / European Patent Office / Office européen des brevets

(11) **EP 4 749 970 A1**

(12) **EUROPEAN PATENT APPLICATION**
published in accordance with Art. 153(4) EPC

(43) Date of publication:
**27.05.2026  Bulletin 2026/22**

(21) Application number: **25741419.3**

(22) Date of filing: **10.01.2025**

(51) International Patent Classification (IPC):
**H04L 5/00** (2006.01)

(52) Cooperative Patent Classification (CPC):
**H04L 5/00; H04W 72/0446; H04W 72/0453;
H04W 72/542**

(86) International application number:
**PCT/CN2025/071695**

(87) International publication number:
**WO 2025/152857 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.01.2024  CN 202410061024**

(71) Applicant: **HUAWEI TECHNOLOGIES CO., LTD.
Shenzhen 518129 (CN)**

(72) Inventors:
- **WEI, Xiuhong**
  **Shenzhen, Guangdong 518129 (CN)**
- **HE, Hongli**
  **Shenzhen, Guangdong 518129 (CN)**
- **WANG, Bichai**
  **Shenzhen, Guangdong 518129 (CN)**

(74) Representative: **Gill Jennings & Every LLP
The Broadgate Tower
20 Primrose Street
London EC2A 2ES (GB)**

(54) **SIGNAL TRANSMISSION METHOD AND APPARATUS**

(57) Embodiments of this application provide a signal transmission method and an apparatus. A first time domain resource is determined based on a first frequency domain resource, a second frequency domain resource, a period length, and a period index, where the first frequency domain resource is selected from a plurality of candidate frequency domain resources, and the second frequency domain resource is a frequency domain resource for sending a reference signal in a first period or a frequency domain resource determined based on a configuration parameter. The reference signal is sent on the first frequency domain resource and the first time domain resource. In this way, a plurality of candidate frequency domain resources can be provided for reference signals to be periodically sent, to increase a possibility of sending the reference signal, and improve sensing performance.

300

| Transmitting end device | Network device | Receiving end device |

Scenario 1 — 3011: Send first indication information — 3012: Send the first indication information

Scenario 2 — 3021: Send first indication information

310: Determine a first time domain resource based on a first frequency domain resource, a second frequency domain resource, a period length, and a period index

320: Send a reference signal

FIG. 3

## Description

This application claims priority to Chinese Patent Application No. 202410061024.1, filed with the China National Intellectual Property Administration on January 15, 2024 and entitled "SIGNAL TRANSMISSION METHOD AND APPARATUS", which is incorporated herein by reference in its entirety.

## TECHNICAL FIELD

Embodiments of this application relate to the communication field, and in particular, to a signal transmission method and an apparatus.

## BACKGROUND

When periodic reference signals are used for target sensing, to ensure a good sensing result, the reference signal needs to be sent at equal time intervals in a same frequency band. Otherwise, sensing performance deteriorates.

Therefore, how to improve the sensing performance becomes an urgent problem to be resolved.

## SUMMARY

Embodiments of this application provide a signal transmission method and an apparatus, to provide a plurality of candidate frequency domain resources for reference signals to be periodically sent, so as to improve sensing performance.

According to a first aspect, a signal transmission method is provided. The method includes: determining a first time domain resource based on a first frequency domain resource, a second frequency domain resource, a period length, and a period index, where the first frequency domain resource is selected from a plurality of candidate frequency domain resources, and the second frequency domain resource is a frequency domain resource for sending a reference signal in a $1^{st}$ period or a frequency domain resource determined based on a configuration parameter; and sending the reference signal on the first frequency domain resource and the first time domain resource.

The method may be performed by a communication apparatus. The communication apparatus may be a transmitting end device (for example, a terminal device; for another example, a network device), or may be a chip or a circuit used in the transmitting end device. This is not limited in this application.

In this embodiment of this application, the plurality of candidate frequency domain resources are provided for the reference signal. In this way, when an originally selected frequency domain resource for the reference signal is occupied, another frequency domain resource can be selected. In addition, a time domain resource is determined based on the frequency domain resource for sending the reference signal, so that a phase error generated by a frequency domain jump can be compensated for in time domain, and it is ensured that the reference signal can be sent as much as possible in each period, to improve sensing performance of sending the reference signal.

Specifically, in each period, when sending the reference signal fails or may fail, a frequency domain resource may be selected from the plurality of candidate frequency domain resources, or a resource for sending the reference signal may be directly selected from the plurality of candidate resources. This improves resource scheduling flexibility, and can greatly increase a sending probability of the reference signal in each period.

With reference to the first aspect, in some implementations of the first aspect, the determining the first time domain resource based on the first frequency domain resource, the second frequency domain resource, the period length, and the period index may be determining a first time domain offset based on the first frequency domain resource, the second frequency domain resource, the period length, and the period index, where the first time domain offset indicates a time domain offset between the first time domain resource and a second time domain resource, and the second time domain resource is a time domain resource for sending the reference signal in the $1^{st}$ period; and determining the first time domain resource based on the first time domain offset and the second time domain resource.

In this embodiment of this application, a time domain resource for actually sending the reference signal in a current period is determined based on: a time domain offset determined based on a frequency domain resource for actually sending the reference signal in the current period, an originally selected frequency domain resource for sending the reference signal, a period length, and a period index of the current period; and a time domain resource for sending the reference signal in the $1^{st}$ period. In this case, an offset of the time domain resource is associated with an offset of the frequency domain resource, to reduce a measurement error caused by the offset of the frequency domain resource.

With reference to the first aspect, in some implementations of the first aspect, the determining the first time domain offset based on the first frequency domain resource, the second frequency domain resource, the period length, and the period index may be determining a first time domain offset value based on the first frequency domain resource, the second frequency domain resource, the period length, and the period index; and determining the first time domain offset based on the first time domain offset value.

The first time domain offset value offset1 satisfies the following formula:

$$\text{offset1} = \frac{f}{f'} mT$$

where $f'$ is a frequency corresponding to the first frequency domain resource, $f$ is a frequency corresponding to the second frequency domain resource, $m$ is the period index, and $T$ is the period length.

In this embodiment of this application, accurate time domain compensation is performed, through parameter calculation, on a measurement error caused by sending the reference signal on different frequency domain resources, to implement accurate sensing on the different frequency domain resources, and ensure that sending the reference signal on the different frequency domain resources can have an equivalent effect to sending the reference signal on a same frequency domain resource.

With reference to the first aspect, in some implementations of the first aspect, the determining the first time domain resource based on the first frequency domain resource, the second frequency domain resource, the period length, and the period index may be determining a third time domain resource, where the third time domain resource is determined based on the period length, the period index, and a second time domain resource, and the second time domain resource is a time domain resource for sending the reference signal in the 1st period; determining a second time domain offset based on the first frequency domain resource and the second frequency domain resource, where the second time domain offset indicates a time domain offset between the first time domain resource and the third time domain resource; and determining the first time domain resource based on the second time domain offset and the third time domain resource.

In this embodiment of this application, a time domain resource for actually sending the reference signal in a current period is determined based on: a time domain offset determined based on a frequency domain resource for actually sending the reference signal in the current period and the second frequency domain resource; and a time domain resource for sending the reference signal on the second frequency domain resource in the current period. In this case, an offset of the time domain resource is associated with an offset of the frequency domain resource, to reduce a measurement error caused by the offset of the frequency domain resource.

With reference to the first aspect, in some implementations of the first aspect, the determining the second time domain offset based on the first frequency domain resource and the second frequency domain resource may be that a frequency corresponding to the first frequency domain resource is greater than or equal to a frequency corresponding to the second frequency domain resource, and the second time domain offset is less than or equal to 0; or a frequency corresponding to the first frequency domain resource is less than a frequency corresponding to the second frequency domain resource, and the second time domain offset is greater than 0.

In this embodiment of this application, a time domain offset is determined based on a size relationship between the first frequency domain resource and the second frequency domain resource, to perform time domain compensation, so as to reduce a measurement error caused by the offset of the frequency domain resource.

With reference to the first aspect, in some implementations of the first aspect, the determining the second time domain offset based on the first frequency domain resource and the second frequency domain resource may be determining a second time domain offset value based on the first frequency domain resource, the second frequency domain resource, the period length, and the period index; and determining the second time domain offset based on the second time domain offset value.

The second time domain offset value offset2 satisfies the following formula:

$$\text{offset2} = \frac{f - f'}{f'} mT$$

where $f'$ is the frequency corresponding to the first frequency domain resource, $f$ is the frequency corresponding to the second frequency domain resource, $m$ is the period index, and $T$ is the period length.

In this embodiment of this application, accurate time domain compensation is performed, through parameter calculation, on a measurement error caused by sending the reference signal on different frequency domain resources, to implement accurate sensing on the different frequency domain resources, and ensure that sending the reference signal on different frequency domain resources can have an equivalent effect to sending the reference signal on a same frequency domain resource.

With reference to the first aspect, in some implementations of the first aspect, the second time domain offset is less than the period length.

With reference to the first aspect, in some implementations of the first aspect, the method may further include:

receiving first indication information, where the first indication information indicates one or more of the plurality of candidate frequency domain resources, the period length, and the second frequency domain resource.

In this embodiment of this application, the first indication information indicates one or more of the plurality of candidate frequency domain resources, the period length, and the second frequency domain resource, so that the transmitting end device can determine the first frequency domain resource and the first time domain resource. In addition, indication of the first frequency domain resource and the first time domain resource in each period can be avoided, to reduce signaling overheads.

With reference to the first aspect, in some implementations of the first aspect, the method further includes: sending second indication information, where the second indication information indicates one or more of at least one frequency domain resource in the plurality of candidate frequency domain resources, the second frequency domain resource, and the period index.

In this embodiment of this application, the second indication information is sent to indicate one or more of the at least one frequency domain resource in the plurality of candidate frequency domain resources, the second frequency domain resource, and the period index, so that a receiving end device or another device can know a frequency domain resource and a time domain resource for sending the reference signal in a subsequent period, to correctly reserve an expected resource required for sending the reference signal, so as to increase a success rate of sending the reference signal, and improve sensing accuracy.

With reference to the first aspect, in some implementations of the first aspect, the method further includes: performing listen before talk LBT; and the determining the first frequency domain resource from the plurality of candidate frequency domain resources may be determining the first frequency domain resource from the plurality of candidate frequency domain resources based on a result of the LBT.

With reference to the first aspect, in some implementations of the first aspect, the first frequency domain resource is different from the second frequency domain resource.

With reference to the first aspect, in some implementations of the first aspect, a difference between frequencies corresponding to any two of the plurality of candidate frequency domain resources is greater than a first threshold.

According to a second aspect, a signal transmission method is provided. The method includes: determining a first time domain resource based on a first frequency domain resource, a second frequency domain resource, a period length, and a period index, where the first frequency domain resource is selected from a plurality of candidate frequency domain resources, and the second frequency domain resource is a frequency domain resource for sending a reference signal in a $1^{st}$ period or a frequency domain resource determined based on a configuration parameter; and receiving the reference signal on the first frequency domain resource and the first time domain resource.

The method may be performed by a communication apparatus. The communication apparatus may be a receiving end device (for example, a terminal device; for another example, a network device), or may be a chip or a circuit used in the receiving end device. This is not limited in this application.

In this embodiment of this application, the plurality of candidate frequency domain resources are provided for the reference signal. In this way, when an originally selected frequency domain resource for the reference signal is occupied, another frequency domain resource can be selected. In addition, a time domain resource is determined based on the frequency domain resource for receiving the reference signal, so that a phase error generated by a frequency domain jump can be compensated for in time domain, and it is ensured that the reference signal can be received as much as possible in each period, to improve sensing performance of receiving the reference signal.

Specifically, in each period, receiving the reference signal can greatly increase a probability of successfully receiving the reference signal in each period, and improve flexibility of resource scheduling.

With reference to the second aspect, in some implementations of the second aspect, the determining the first time domain resource based on the first frequency domain resource, the second frequency domain resource, the period length, and the period index may be determining a first time domain offset based on the first frequency domain resource, the second frequency domain resource, the period length, and the period index, where the first time domain offset indicates a time domain offset between the first time domain resource and a second time domain resource, and the second time domain resource is a time domain resource for receiving the reference signal in the $1^{st}$ period; and determining the first time domain resource based on the first time domain offset and the second time domain resource.

In this embodiment of this application, a time domain resource for actually sending the reference signal in a current period is determined based on: a time domain offset determined based on a frequency domain resource for actually sending the reference signal in the current period, an originally selected frequency domain resource for sending the reference signal, a period length, and a period index of the current period; and a time domain resource for receiving the reference signal in the $1^{st}$ period. In this case, an offset of the time domain resource is associated with an offset of the frequency domain resource, to reduce a measurement error caused by the offset of the frequency domain resource.

With reference to the second aspect, in some implementations of the second aspect, the determining the first time domain offset based on the first frequency domain resource, the second frequency domain resource, the period length, and the period index may be determining a first time domain offset value based on the first frequency domain resource, the second frequency domain resource, the period length, and the period index; and determining the first time domain offset based on the first time domain offset value.

The first time domain offset value offset1 satisfies the following formula:

$$\text{offset1} = \frac{f}{f'} mT$$

where $f'$ is a frequency corresponding to the first frequency domain resource, $f$ is a frequency corresponding to the second frequency domain resource, $m$ is the period index, and $T$ is the period length.

In this embodiment of this application, accurate time domain compensation is performed, through parameter calculation, on a measurement error caused by receiving the reference signal on different frequency domain resources, to implement accurate sensing on the different frequency domain resources, and ensure that receiving the reference signal on different frequency domain resources can have an equivalent effect to receiving the reference signal on a same frequency domain resource.

With reference to the second aspect, in some implementations of the second aspect, the determining the first time domain resource based on the first frequency domain resource, the second frequency domain resource, the period length, and the period index may be determining a third time domain resource, where the third time domain resource is determined based on the period length, the period index, and a second time domain resource, and the second time domain resource is a time domain resource for receiving the reference signal in the 1st period; determining a second time domain offset based on the first frequency domain resource and the second frequency domain resource, where the second time domain offset indicates a time domain offset between the first time domain resource and the third time domain resource; and determining the first time domain resource based on the second time domain offset and the third time domain resource.

In this embodiment of this application, the first time domain resource is determined based on: a time domain offset determined based on a frequency domain resource for actually receiving the reference signal and a time domain resource for receiving the reference signal on the second frequency domain resource in a current period. In this case, an offset of the time domain resource is associated with an offset of the frequency domain resource, to reduce a measurement error caused by the offset of the frequency domain resource.

With reference to the second aspect, in some implementations of the second aspect, the determining the second time domain offset based on the first frequency domain resource and the second frequency domain resource may be that a frequency corresponding to the first frequency domain resource is greater than or equal to a frequency corresponding to the second frequency domain resource, and the second time domain offset is less than or equal to 0; or a frequency corresponding to the first frequency domain resource is less than a frequency corresponding to the second frequency domain resource, and the second time domain offset is greater than 0.

In this embodiment of this application, the time domain offset is determined based on a size relationship between the first frequency domain resource and the second frequency domain resource, to perform time domain compensation, so as to reduce a measurement error caused by the offset of the frequency domain resource.

With reference to the second aspect, in some implementations of the second aspect, the determining the second time domain offset based on the first frequency domain resource and the second frequency domain resource may be determining a second time domain offset value based on the first frequency domain resource, the second frequency domain resource, the period length, and the period index; and determining the second time domain offset based on the second time domain offset value.

The second time domain offset value offset2 satisfies the following formula:

$$\text{offset2} = \frac{f - f'}{f'} mT$$

where $f'$ is the frequency corresponding to the first frequency domain resource, $f$ is the frequency corresponding to the second frequency domain resource, $m$ is the period index, and $T$ is the period length.

In this embodiment of this application, accurate time domain compensation is performed, through parameter calculation, on a measurement error caused by receiving the reference signal on different frequency domain resources, to implement accurate sensing on the different frequency domain resources, and ensure that receiving the reference signal on different frequency domain resources can have an equivalent effect to receiving the reference signal on a same frequency domain resource.

With reference to the second aspect, in some implementations of the second aspect, the second time domain offset is less than the period length.

With reference to the second aspect, in some implementations of the second aspect, the method may further include: receiving first indication information, where the first indication information indicates one or more of the plurality of candidate frequency domain resources, the period length, and the second frequency domain resource.

In this embodiment of this application, the first indication information indicates one or more of the plurality of candidate frequency domain resources, the period length, and the second frequency domain resource, so that the receiving end device can determine the first frequency domain resource and the first time domain resource. In this case, indication of the first frequency domain resource and the first time domain resource in each period can be avoided, to reduce signaling overheads.

With reference to the second aspect, in some implementations of the second aspect, the method further includes: receiving second indication information, where the second indication information indicates one or more of at least one frequency domain resource in the plurality of candidate frequency domain resources, the second frequency domain resource, and the period index.

In this embodiment of this application, the second indication information is received to indicate one or more of the at least one frequency domain resource in the plurality of candidate frequency domain resources, the second frequency domain resource, and the period index, so that the receiving end device or another device can know a frequency domain resource and a time domain resource for sending the reference signal in a subsequent period, to correctly reserve an expected resource required for sending the reference signal, so as to increase a success rate of receiving the reference signal, and improve sensing accuracy.

With reference to the second aspect, in some implementations of the second aspect, the first frequency domain resource is different from the second frequency domain resource.

With reference to the second aspect, in some implementations of the second aspect, a difference between frequencies corresponding to any two of the plurality of candidate frequency domain resources is greater than a first threshold.

According to a third aspect, a communication apparatus is provided. The apparatus is configured to perform the method according to either the foregoing first aspect or the foregoing second aspect. Specifically, the apparatus may include a unit and/or a module configured to perform the method according to any one of the implementations of either the first aspect or the second aspect, for example, a processing unit and/or a communication unit.

In an implementation, the apparatus is a communication device (for example, a receiving end device; for another example, a transmitting end device). When the apparatus is the communication device, the communication unit may be a transceiver or an input/output interface, and the processing unit may be at least one processing circuit, for example, a processor or a circuit used for a processing function in a processor. Optionally, the transceiver may be a transceiver circuit. Optionally, the input/output interface may be an input/output circuit.

In another implementation, the apparatus is a chip, a chip system, or a circuit used in the communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processing circuit, configured to perform the method according to any one of the implementations of either the foregoing first aspect or the foregoing second aspect.

In an implementation, the apparatus is a communication device (for example, a receiving end device; for another example, a transmitting end device).

In another implementation, the apparatus is a chip, a chip system, or a circuit used in the communication device.

The communication apparatus may include a transceiver circuit. When the apparatus is the communication device, the transceiver circuit may be a transceiver. When the apparatus is the chip, the chip system, or the circuit used in the communication device, the transceiver circuit may be an interface circuit or an input/output circuit.

Optionally, the at least one processing circuit may be configured to execute a computer program or instructions stored in a memory, to perform the method according to any one of the implementations of either the foregoing first aspect or the foregoing second aspect. The memory may be located inside the communication apparatus, or may be located outside the communication apparatus.

Optionally, the communication apparatus further includes the memory.

According to a fifth aspect, this application provides a processing circuit (or a processor), configured to perform the methods provided in the foregoing aspects.

Unless otherwise specified, or if operations such as sending and obtaining/receiving related to the processing circuit (or the processor) do not conflict with actual functions or internal logic in related descriptions, the operations may be understood as operations such as output and input operations of the processing circuit, or may be understood as sending and receiving operations performed by a radio frequency circuit and an antenna. This is not limited in this application.

According to a sixth aspect, a computer-readable storage medium is provided. The computer-readable medium stores program code to be executed by a device, and the program code is used to perform the method according to any one of the implementations of either the foregoing first aspect or the foregoing second aspect.

According to a seventh aspect, a computer program product including instructions is provided. When the computer program product runs on a computer, the computer is caused to perform the method according to any one of the implementations of either the foregoing first aspect or the foregoing second aspect.

According to an eighth aspect, a chip is provided. The chip includes a processing circuit and a communication interface. The processing circuit reads, through the communication interface, instructions stored in a memory, to perform the method according to any one of the implementations of either the foregoing first aspect or the foregoing second aspect.

Optionally, in an implementation, the chip further includes the memory. The memory stores a computer program or the instructions. The processing circuit is configured to execute the computer program or the instructions stored in the memory. When the computer program or the instructions are executed, the processing circuit is configured to perform the method according to any one of the implementations of either the foregoing first aspect or the foregoing second aspect.

According to a ninth aspect, a communication system is provided. The communication system includes the foregoing communication apparatus, for example, the communication apparatus that performs the method according to any one of the implementations of the first aspect, and the communication apparatus that performs the method according to any one of the implementations of the second aspect.

## BRIEF DESCRIPTION OF DRAWINGS

FIG. 1 is a diagram of an example communication scenario to which an embodiment of this application may be applied;
FIG. 2 is a diagram of currently sending a reference signal based on a single pattern;
FIG. 3 is a schematic flowchart of a signal transmission method according to an embodiment of this application;
FIG. 4 is a diagram of a pattern of a reference signal according to an embodiment of this application;
FIG. 5 is a diagram of a signal transmission method according to another embodiment of this application;
FIG. 6 is a diagram of a signal transmission method according to still another embodiment of this application;
FIG. 7 and FIG. 8 are diagrams of resource reservation manners according to embodiments of this application;
FIG. 9 is a diagram of a communication apparatus according to an embodiment of this application; and
FIG. 10 is a diagram of a communication apparatus according to an embodiment of this application.

## DESCRIPTION OF EMBODIMENTS

The following describes technical solutions of this application with reference to accompanying drawings.

The technical solutions provided in this application may be applied to various communication systems, such as a $5^{th}$ generation ($5^{th}$ generation, 5G) or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a $6^{th}$ generation mobile communication system. The technical solutions provided in this application may be further applied to sidelink (sidelink, SL) communication, vehicle-to-everything (vehicle-to-everything, V2X) communication, machine to machine (machine to machine, M2M) communication, machine type communication (machine type communication, MTC), an Internet of things (Internet of things, IoT) communication system, or another communication system. In an example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device. The technical solutions provided in this application may be further applied to a licensed spectrum scenario and an unlicensed spectrum scenario.

A terminal device in embodiments of this application includes various devices having a wireless communication function, and the terminal device may be configured to be connected to a person, an object, a machine, and the like. The terminal device may be widely used in various scenarios, for example, cellular communication, an SL, V2X, peer to peer (peer to peer, P2P), M2M, MTC, an IoT, virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal, an IoT terminal, or the like. The terminal device may be a user equipment (user equipment, UE) in a $3^{rd}$ generation partnership project ($3^{rd}$ generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-rotor helicopter, or an airplane), a ship, a remote control device, a smart home device, an industrial device, an apparatus built in the foregoing device (for example, a communication module, a modem, or a chip in the foregoing device), or another processing device connected to the modem.

It should be understood that in some scenarios, the terminal device may alternatively serve as a base station. For example, the terminal device may serve as a scheduling entity that provides a sidelink signal between terminal devices in a V2X scenario, an SL scenario, a P2P scenario, or the like.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip, or may include a chip and another discrete component.

In embodiments of this application, the network device may be a device for communicating with the terminal device. The network device may also be referred to as an access network device or a radio access network device. For example, the network device may be a base station. The base station may cover various names in the following in a broad sense, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that functions as a base station in D2D, V2X, and M2M communication, a network side device in a 6G network, a device that functions as a base station in a future communication system, or the like. The base station may support networks using a same access technology or different access technologies. A specific technology and a specific device form used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In embodiments of this application, an apparatus configured to implement a function of the network device may be an independent network device, or may be a discrete apparatus and software that can support the network device in implementing the function. When the software and hardware can be combined to implement the function of the network device, the apparatus may be installed in the network device. In embodiments of this application, the chip system may include a chip, or may include a chip and another discrete component.

The network device and the terminal device may be deployed on land, including an indoor or outdoor device, a handheld or vehicle-mounted device; or may be deployed on a water surface; or may be deployed on an airplane, a balloon, or a satellite in air. Scenarios in which the network device and the terminal device are located are not limited in embodiments of this application. In addition, the terminal device and the network device may be hardware devices, or may be software functions running on dedicated hardware, or software functions running on general-purpose hardware, for example, virtualized functions instantiated on a platform (for example, a cloud platform), or may be entities including a dedicated or general-purpose hardware device and a software function. Specific forms of the terminal device and the network device are not limited in this application.

The following describes the technical solutions in embodiments of this application with reference to the accompanying drawings in embodiments of this application. In the descriptions of this application, unless otherwise specified, "/" indicates that associated objects are in an "or" relationship. For example, A/B may indicate A or B. In this application, "and/or" describes only an association relationship between associated objects and indicates that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to a similar technical problem.

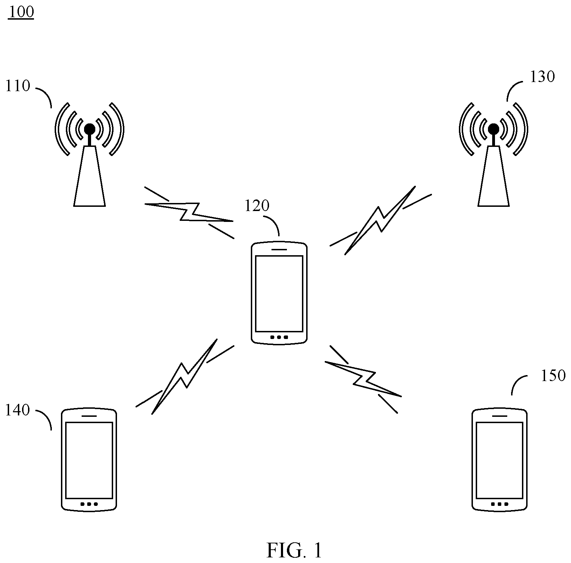

FIG. 1 is a diagram of an example communication scenario to which an embodiment of this application may be applied.

For a communication system 100 shown in FIG. 1, the system may include a first network device 110 and a sensed object 120. The sensed object 120 may be a terminal device, or may be another object, for example, an object such as a person or a vehicle. When the first network device 110 needs to obtain a state of the sensed object 120, for example, a distance or a velocity, the first network device 110 may serve as a sensing device to send a reference signal to the sensed object 120, so as to obtain state information such as the distance and the velocity of the sensed object 120 based on a received reflected signal of the reference signal. In the following, a scenario in which the velocity of the sensed object 120 is obtained by using the reference signal is described in embodiments of this application. However, a scope of embodiments of this application is not limited to obtaining the velocity of the sensed object 120, and other state information may also be obtained.

The received reflected signal of the reference signal is a received reference signal, and the reflected signal and the reference signal are not distinguished in the following.

The sensing device in embodiments of this application may be a device that sends a reference signal, or may be a device that receives a reference signal, or may be a device that needs to obtain state information of the sensed object 120. This is not limited in this application.

The communication system 100 may further include a second network device 130. After the first network device 110 sends the reference signal, the reference signal, reflected by the sensed object 120, may be received by the first network device 110, or may be received by the second network device 130. When the sensed object 120 is a terminal device, the sensed object 120 may also serve as a receiving end device of the reference signal. After receiving the reference signal, the sensed object 120 obtains channel information based on the reference signal, to parse out the state information of the sensed object 120, and the sensed object 120 may also report a measurement result to the first network device.

The communication system 100 may further include a first terminal device 140. After the first network device 110 sends the reference signal, the reference signal, reflected by the sensed object 120, may be further received by the first terminal device 140.

The reference signal may also be sent by the first terminal device 140. The reference signal, reflected by the sensed object 120, may be received by a network device (for example, the first network device 110), or may be received by the first terminal device 140, or may be received by another terminal device (for example, a second terminal device 150). When the sensed object 120 is a terminal device, the sensed object may also receive the reference signal.

The network device may configure parameter information of the reference signal for the terminal device by using signaling, to indicate the terminal device to send or receive the reference signal based on a configuration. For example, the signaling may be radio resource control (radio resource control, RRC) signaling, media access control-control element (media access control-control element, MAC-CE) signaling, or downlink control information (downlink control information, DCI).

The first network device 110 or the first terminal device 140 may also send the reference signal on an unlicensed spectrum. When the reference signal is sent by using the unlicensed spectrum, the reference signal sent by the first network device 110 or the first terminal device 140, reflected by the sensed object 120, may be received by the first terminal device, or may be received by another terminal (for example, the second terminal device 150), or may be received by a network device (for example, the first network device 110). When the sensed object 120 is a terminal device, the reference signal may also be received by the sensed object 120.

When the first terminal device 140 sends the reference signal, and another terminal device serves as a receiving end device, using a sidelink as an example, the first terminal may further send sidelink control information (sidelink control information, SCI). The SCI is carried on a physical sidelink control channel (physical sidelink control channel, PSCCH), and the another terminal device may receive the reference signal based on a parameter that is of the reference signal and that is configured by using the SCI.

When the first terminal device 140 sends the reference signal, for example, in an SL scenario, the terminal device may alternatively use an autonomously selected resource allocation manner. To be specific, before sending a signal, the terminal device monitors resource reservation information sent by another terminal device, measures a corresponding received power, and selects a resource that is not reserved by the another terminal device or that is reserved by the another terminal device but has a low received power, to avoid mutual interference caused by occupation of a same transmission resource between terminal devices in advance. This resource allocation manner may also be referred to as a mode 2 (mode 2).

In a sensing scenario, obtaining the velocity of the sensed object 120 is used as an example. When the velocity of the sensed object 120 needs to be measured by using the reference signal, the velocity of the sensed object 120 is usually measured by periodically sending the reference signal in a same frequency band. To ensure a good sensing result, it needs to be ensured that a frequency band position remains unchanged, and a time interval for sending the reference signal remains unchanged. If another frequency band is jumped to, so as to send the reference signal in some periods, or the reference signal is not sent at equal time intervals, an additional phase error is introduced, and sensing performance deteriorates. In addition, when the reference signal is sent on the unlicensed spectrum, to avoid interference, before the reference signal is sent, listen before talk (listen before talk, LBT) detection, which is also referred to as a monitoring avoidance mechanism, needs to be performed. If LBT fails, a channel cannot be accessed to send the reference signal. Consequently, the reference signal fails to be sent, and the sensing performance is affected.

A frequency band may be a bandwidth part (bandwidth part, BWP), a resource block (resource block, RB), a resource block set (resource block set), a subchannel (subchannel), an interlace (interlace), an interlace group, or the like. One RB includes 12 resource elements (resource elements, REs), and one RE corresponds to one subcarrier in frequency domain. For example, one frequency band may be one RB set whose bandwidth is 20 MHz.

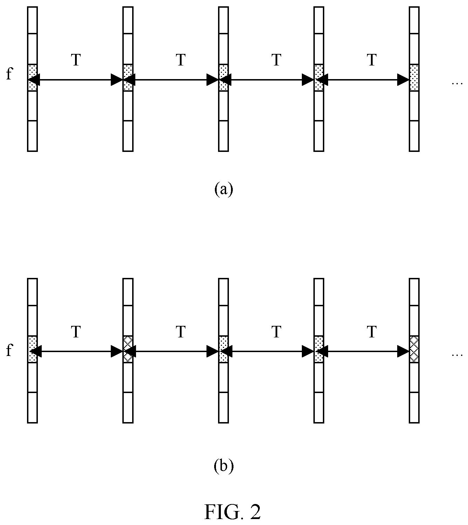

FIG. 2 is a diagram of currently sending a reference signal based on a single pattern.

(a) in FIG. 2 shows a current method for sending a reference signal based on a single pattern. In this method, the reference signal is sent at equal time intervals T (that is, based on the single pattern) in a same frequency band. For example, after a sensing device sends the reference signal, the sensing device receives a reflected signal, and only a single sensed object exists. A frequency of sending the reference signal is f, and a sending period is T. In this case, a signal received in an $m^{th}$ period may be expressed as $d_{RX}[m] = d_{TX}[m]\sigma \exp\left(-j2\pi f \frac{2R}{c}\right) \exp\left(j2\pi f \frac{2vmT}{c}\right)$, where m is a period index, c indicates the light velocity, R is a distance between the sensed object and the sensing device, v indicates a relative velocity between the sensing device and the sensed object, $\sigma$ is a power attenuation factor, and $d_{TX}[m]$ is a reference signal sent by a transmitting end device. Through division of $d_{RX}[m]$ by a known reference signal $d_{TX}[m]$, channel information of the $m^{th}$ period $h[m] = \sigma \exp\left(-j2\pi f \frac{2R}{c}\right) \exp\left(j2\pi f \frac{2vmT}{c}\right)$ can be obtained, and the relative velocity between the sensing device and the sensed object may cause a phase of the channel information to change with time. Therefore, a velocity of the sensed object may be estimated based on phase information of signals received in different periods. A processing manner may be: performing Fourier transform on channel information obtained in different periods, to obtain a Doppler spectrum of a channel, where a position of a peak of the Doppler spectrum corresponds to the velocity of the sensed object relative to the sensing device; or estimating the velocity of the sensed object based on the signals received in the different periods and based on multiple signal classification, artificial intelligence, and other algorithms.

As shown in (b) in FIG. 2, in the foregoing method, on an unlicensed spectrum, LBT may fail in some periods, that is, it is detected that a channel is occupied, and consequently, the reference signal fails to be sent in the period, and sensing performance deteriorates. For example, in (b) in FIG. 2, a dot shadow indicates a normally sent reference signal, and a grid shadow indicates a case in which the reference signal cannot be sent due to occupation.

Even in a scenario in which the LBT is not required, for example, in a licensed spectrum scenario, a pattern of the reference signal is simple, a resource scheduling manner is not flexible enough, and the reference signal can be sent only on a fixed frequency domain resource in each period. A service with a higher priority may need to occupy resources in some periods, causing a resource collision. In particular, when a requirement for velocity test resolution and accuracy is high, and a total length required for sensing is long, a probability of causing the resource collision is higher.

To increase a probability of successfully sending the reference signal in each period, so as to improve sensing performance, embodiments of this application provide a more flexible resource scheduling manner.

The following describes in detail a signal transmission method provided in embodiments of this application with reference to the accompanying drawings. Embodiments provided in this application may be applied to the communication system shown in FIG. 1. This is not limited.

In the following embodiments, for ease of description, a device that sends a reference signal is referred to as a transmitting end device, and a device that receives the reference signal is referred to as a receiving end device. The transmitting end device may be a network device or a terminal device, and the receiving end device may be a network device or a terminal device. A specific structure of an execution body of the method provided in embodiments of this application is not particularly limited in the following embodiments, provided that a program that records code of the method provided in embodiments of this application can be run to perform communication based on the method provided in embodiments of this application. For example, the execution body of the method provided in embodiments of this application may be a receiving end device or a transmitting end device, or a functional module that can invoke and execute the program in the receiving end device or the transmitting end device, for example, a chip or a chip system installed in the receiving end device or the transmitting end device. Without loss of generality, the following describes in detail the method provided in embodiments of this application by using interaction between the receiving end device and the transmitting end device as an example.

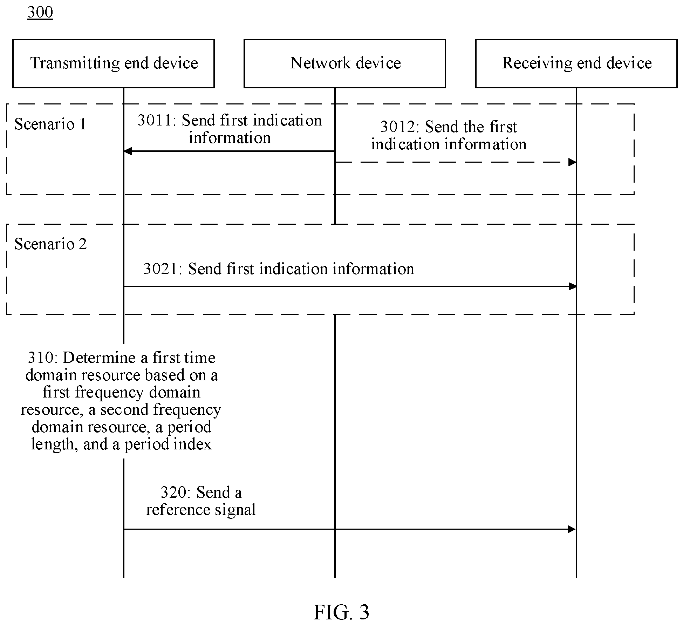

FIG. 3 is a schematic flowchart of a signal transmission method according to an embodiment of this application. The method 300 may include the following steps.

310: A transmitting end device determines a first time domain resource based on a first frequency domain resource, a second frequency domain resource, a period length, and a period index.

A frequency domain resource may include one or more frequency domain units. One frequency domain unit may be one RB, one subcarrier (subcarrier), one resource block group (resource block group, RBG), one predefined subband (subband), one precoding resource block group (precoding resource block group, PRBG), one BWP, one RE (also referred to as a resource unit or a resource element), one carrier, or one serving cell. This is not limited.

A time domain resource may include one or more time domain units (also referred to as time units). One time domain unit may be one symbol (symbol), one orthogonal frequency division multiplexing (orthogonal frequency division multiplexing, OFDM) symbol, one mini-slot (mini-slot), one slot (slot), a partial slot (partial slot), one subframe (subframe), one radio frame (radio frame), or the like.

The first frequency domain resource is selected from a plurality of candidate frequency domain resources, and the first frequency domain resource is a frequency domain resource for sending a reference signal. The first frequency domain resource may be one frequency domain resource, or may be a plurality of frequency domain resources. When the first frequency domain resource is the plurality of frequency domain resources, the transmitting end device may send reference signals for a plurality of times in one period, and a receiving end device may jointly process the reference signals, to improve sensing accuracy.

It should be understood that frequency domain ranges corresponding to the plurality of candidate frequency domain resources are different from each other, that is, the frequency domain ranges of the plurality of candidate frequency domain resources do not completely overlap. For example, none of the frequency domain ranges of the plurality of candidate frequency domain resources overlaps at all, or the frequency domain ranges of the plurality of candidate frequency domain resources partially overlap.

The plurality of candidate frequency domain resources may be configured or predefined by a network device, or may be determined by a terminal device.

The reference signals are sent in a plurality of periods. In this way, state information of a target (that is, the sensed object described above) is easily sensed. For example, a moving velocity of the target is easily sensed. The second frequency domain resource may be a frequency domain resource for sending the reference signal in a $1^{st}$ period in the plurality of periods, or may be a frequency domain resource that should be for sending the reference signal in a conventional manner, or may be a frequency domain resource that is configured by a higher layer and that is for sending the reference signal, that is, may be a frequency domain resource determined based on a configuration parameter. It should be understood that the $1^{st}$ period may be specific to a $1^{st}$ reference signal sent in a $1^{st}$ period in a plurality of periods of a sensing process, or may be specific to a $1^{st}$ reference signal sent for a target, or may be specific to a $1^{st}$ reference signal sent for different sensing processes of a same target, where the different sensing processes may have different $1^{st}$ periods. The configuration parameter may be configured by using signaling. For example, the signaling is RRC signaling, MAC CE signaling, or DCI.

In frequency domain, each reference signal may consecutively occupy a plurality of subcarriers, or inconsecutively occupy a plurality of subcarriers in a comb tooth structure. This is not limited in this application.

320: The transmitting end device sends a reference signal.

Specifically, the transmitting end device sends the reference signal on the first frequency domain resource and the first time domain resource.

Correspondingly, the receiving end device may receive the reference signal on the first frequency domain resource and the first time domain resource.

A process of determining the first frequency domain resource and the first time domain resource and the step of sending the reference signal may be completed by a same device, or may be completed by different devices. That a plurality of devices jointly complete the method provided in this embodiment of this application is also considered as using the solution provided in this application.

In this embodiment of this application, the plurality of candidate frequency domain resources are provided for the reference signal. In this way, in some periods, when an originally selected frequency domain resource for the reference signal is occupied, another frequency domain resource can be selected, and it is ensured that the reference signal can be sent as much as possible in each period. In addition, a time domain resource is determined based on the frequency domain resource for sending the reference signal, so that a phase error generated due to different frequency domain resources for sending reference signals in different periods can be compensated for in time domain, to improve sensing performance.

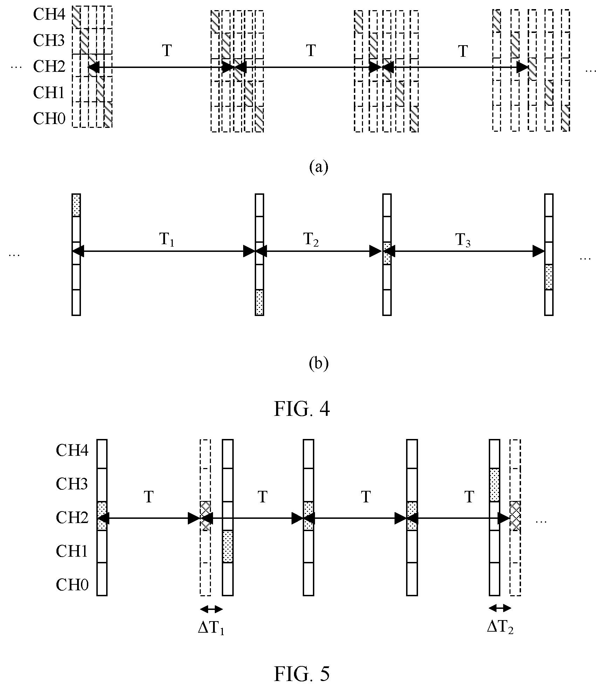

The following describes, with reference to FIG. 4, a pattern of a reference signal applicable to an embodiment of this application. In a pattern of a reference signal shown in (a) in FIG. 4, FIG. 4 shows five candidate frequency domain resources, namely, channels CH0, CH1, CH2, CH3, and CH4, and frequencies corresponding to the channels are in ascending order. Refer to (a) in FIG. 4. A twill shadow indicates a possible candidate time-frequency resource for sending the reference signal in each period, and the reference signal may be sent on only one candidate time-frequency resource or on a plurality of candidate time-frequency resources in each period. Therefore, in this embodiment of this application, there may be a plurality of patterns for actually sending the reference signal. If the reference signal is sent only on CH2 in each period, that is, the reference signal is sent based on the single pattern shown in (a) in FIG. 2, time intervals of sending reference signals between adjacent periods are the same, that is, the reference signals are sent in the same frequency band CH2 at equal time intervals T. However, in this embodiment of this application, different frequency domain resources may be selected in different periods to send the reference signals, and a resource scheduling manner is more flexible. The CH2 may be considered as the second frequency domain resource described above, and is also referred to as a basic frequency domain resource. Time domain resources corresponding to the second frequency domain resource in different periods are distributed at equal time intervals. As described above, the reference signals may be sent in a plurality of periods, and time intervals between adjacent periods in the plurality of periods may be the same or may be different. For example, a time interval between sending the reference signals in a $1^{st}$ period and a $2^{nd}$ period may be different from an interval between sending the reference signal in the $2^{nd}$ period and a $3^{rd}$ period. The period length in this embodiment of this application may be considered as a time interval between adjacent time domain resources when the reference signal is sent at the equal interval on the second frequency domain resource. Although different frequency domain resources are selected in different periods to send the reference signals, sending of the reference signals at equal time intervals on the basic frequency domain resource may be equivalently implemented by adjusting a time domain resource for sending the reference signals. In this case, intervals for sending the reference signals in adjacent periods are no longer completely the same. (b) in FIG. 4 provides an example of a pattern for actually sending the reference signal. A dot shadow indicates a time-frequency resource for actually sending the reference signal, and time intervals $T_1$, $T_2$, and $T_3$ for sending the reference signals in adjacent periods are unequal.

In time domain, each reference signal may occupy one or more time domain units (such as symbols). In an example, the time interval for sending the reference signal may be an interval between start time domain positions, an interval between intermediate time domain positions, or an interval between end time domain positions of two reference signals in adjacent periods, or may be an interval between an end time domain position of a reference signal and a start time domain position of a next reference signal, or may be an interval between a start time domain position of a reference signal and an end time domain position of a next reference signal. In the accompanying drawings of embodiments of this application, an interval between start time domain positions of two reference signals in adjacent periods is used as an example. However, this is not limited in this application. The start time domain position of the reference signal indicates a start position of a time domain resource for sending the reference signal; the end time domain position of the reference signal indicates an end position of the time domain resource for sending the reference signal; and the intermediate time domain position of the reference signal indicates any position of the time domain resource for sending the reference signal other than the start position and the end position.

With reference to FIG. 5, the following describes a process of determining, in each period, a time domain resource for sending a reference signal.

In the method provided in this embodiment of this application, there may be a plurality of opportunities for sending the reference signal in each period. For example, on an unlicensed spectrum, an entire bandwidth may be divided into a plurality of LBT channels (for example, an FR1 frequency band, where B=20 MHz) by using a bandwidth B as granularity, and channel access is allowed to be independently performed on each LBT channel. If in some periods, the channel access fails on an LBT channel on which the reference signal is originally sent, the reference signal may be sent by jumping to an adjacent channel on which LBT succeeds. As shown in FIG. 5, there are five LBT channels in a 100 MHz system bandwidth, namely, CH0, CH1, CH2, CH3, and CH4, and frequencies corresponding to the five LBT channels are in ascending order. Assuming that the reference signal is configured to be periodically sent on CH2 at the beginning, a frequency domain position of the second frequency domain resource is CH2, and a time point corresponding to a time domain position is an integer multiple of T (a time point t=0 corresponding to a $1^{st}$ period). However, LBT in a $2^{nd}$ period (m=1, corresponding to a time point T) fails on CH2 (corresponding to a frequency f). In this case, LBT may continue to be performed on CH1 and CH0 subsequently. Assuming that the LBT succeeds on CH1 subsequently, as shown in FIG. 5, the reference signal may be sent on the CH1 channel. In addition, to prevent LBT failures in some periods on CH2, LBT may alternatively be performed on CH3 and CH4 in advance. If the LBT succeeds, a reference signal in a current period may be sent on CH3/CH4 in advance. For example, if the LBT succeeds in a $5^{th}$ period on CH3, a reference signal may be sent on CH3.

Therefore, a probability of sending the reference signal in each period may be increased to N times an original probability, where N indicates a quantity of LBT channels. For example, in FIG. 5, a probability of sending the reference signal in each period is increased to five times an original probability.

However, to change a frequency domain position for sending the reference signal, a corresponding time domain position needs to meet a specific constraint. Generally, movement of a target may affect a signal received in each period, and causes phases of signals received in different periods to change. A velocity of the target may be estimated based on phases of signals received in a plurality of periods. In some periods, when the reference signal is no longer sent on the originally selected second frequency domain resource, but is sent by jumping to another frequency domain resource, an additional phase error is caused. For example, if the reference signal is sent in an $(m+1)^{th}$ period on the second frequency domain resource whose frequency is $f$, channel information obtained based on the received reference signal may be expressed as $\mathrm{h}[m] = \sigma \exp\left(-j2\pi f \frac{2R}{c}\right) \exp\left(j2\pi f \frac{2vmT}{c}\right)$. If the reference signal is sent in the period by jumping to the first frequency domain resource whose frequency is $f'$, the channel information is expressed as

$$h'[m] = \bar{\sigma}' \exp\left(j2\pi f' \frac{2vmT}{c}\right), \quad \text{where} \quad \bar{\sigma}' = \sigma\exp(-j2\pi f' \frac{2R}{c}). \quad \text{Compared with original}$$

$\bar{\sigma} = \sigma \exp\left(-j2\pi f \frac{2R}{c}\right)$, a phase error $\exp(j2\pi(f' - f) \frac{2R}{c})$ related to a distance is introduced. The phase error related to the distance may be compensated for through calculation, for example, compensated for by estimating a distance from the target in advance. This is not limited in this application. However, a frequency domain jump introduces a phase error $\Delta\emptyset_m = -2\pi mT \frac{2v(f'-f)}{c}$ related to the velocity of the target, causing deterioration of sensing performance. In the foregoing formula, $v$ is the velocity of the target, $c$ is the velocity of light, and T is a period length.

To compensate for the phase error related to the velocity of the target, sending of the reference signal may be delayed or advanced in time domain. Refer to FIG. 5. Assuming that a start time domain position of sending the reference signal in the $1^{st}$ period is a time point t=0, a time domain resource corresponding to the start time domain position is a second time domain resource, and in the $(m+1)^{th}$ period, the reference signal should be sent at a frequency $f$ at a time point t=$m$T, where T is the period length. For example, the reference signal is sent at a frequency f' at a time point $mT + \Delta$T in the $(m+1)^{th}$ period (for example, in FIG. 5, if the reference signal fails to be sent in the $2^{nd}$ period, the reference signal is sent at a time point T+$\Delta$T$_1$; and if the reference signal fails to be sent in the $5^{th}$ period, the reference signal is sent at a time point 4T+$\Delta$T$_2$). To compensate for a phase error that is introduced when the reference signal is sent at different frequencies and that is related to the velocity of the target, a time domain offset value $\Delta$T may be introduced, so that phases related to the velocity of the target in the two sending manners are as equal as possible. In an example, the time domain offset value may satisfy the following formula:

$$\exp\left(j2\pi f \frac{2vmT}{c}\right) = \exp\left(j2\pi f' \frac{2v(mT + \Delta\text{T})}{c}\right)$$

where $v$ is the velocity of the target, and $c$ is the velocity of light.

It may be learned from the calculation result of the foregoing formula that when $f$ - $f'$ > 0, that is, when the frequency $f'$ corresponding to the first frequency domain resource for actually sending the reference signal is less than the frequency $f$ corresponding to the second frequency domain resource, $\Delta$T > 0, that is, a time domain resource for actually sending the reference signal lags behind a time domain resource corresponding to a single pattern in the $(m+1)^{th}$ period; or when $f$ - $f'$ < 0, that is, when the frequency $f'$ corresponding to the frequency domain resource for actually sending the reference signal is greater than the frequency $f$ corresponding to the second frequency domain resource, $\Delta$T < 0, that is, a time domain resource for actually sending the reference signal is earlier than a time domain resource corresponding to a single pattern in the $(m+1)^{th}$ period. It may be understood that, the time domain resource corresponding to the single pattern in the $(m+1)^{th}$ period is a time domain resource corresponding to sending the reference signal on the second frequency domain resource in the $(m+1)^{th}$ period.

Optionally, the determining the first time domain resource based on the first frequency domain resource, the second frequency domain resource, the period length, and the period index in step 310 includes: determining a first time domain offset based on the first frequency domain resource, the second frequency domain resource, the period length, and the period index; and determining the first time domain resource based on the first time domain offset and the second time domain resource. The first time domain offset indicates a time domain offset between the first time domain resource and the second time domain resource, and the second time domain resource is a time domain resource for sending the reference signal in a $1^{st}$ period. In an example, the second time domain resource may also be determined based on a configuration parameter. The configuration parameter is configured by a device higher layer or configured by a network side. The configuration parameter is, for example, a start time domain position for sending the reference signal.

The period index may be a parameter associated with the current period, and the period index may indicate the current sending period. For example, the period index being 1 may indicate that the current period is the 1st period, or may indicate that the current period is a 0th period, or the period index being 0 may indicate that the current period is the 1st period. The foregoing is merely an example. Any parameter indicating the current period may be referred to as the period index. For example, the period index may alternatively be a, b, or c. The period index may also be referred to as another name, for example, a period sequence number. When calculation of the period index is involved, a formula and a mapping relationship may be adaptively adjusted based on an actual correspondence between the period index and a period. If no fundamental conflict is generated, the formula and the mapping relationship should both be considered as solutions protected in this application.

For example, the first time domain resource may be determined by using a time domain resource for sending the reference signal in the 1st period, that is, the second time domain resource, as a start point. The determining the first time domain offset based on the first frequency domain resource, the second frequency domain resource, the period length, and the period index may include: determining a first time domain offset value based on the first frequency domain resource, the second frequency domain resource, the period length and the period index; and determining the first time domain offset based on the first time domain offset value. The first time domain offset value offset1 satisfies the following formula:

$$\text{offset1} = \frac{f}{f'} mT$$

where $f'$ is the frequency corresponding to the first frequency domain resource, $f$ is the frequency corresponding to the second frequency domain resource, m is the period index, $m = 0$ indicates that the current period is the 1st period, and $T$ is the period length.

For example, $f$ is 5 GHz, $f'$ is 5.04 GHz, m is 3, and T is 5 ms. In this case, offset1 is 14.88 ms. The determining the first time domain offset based on the first time domain offset value may be rounding up, rounding down, or rounding off a length of a symbol or a slot based on a length determined by offset1. Optionally, the determining the first time domain resource based on the first frequency domain resource, the second frequency domain resource, the period length, and the period index in step 310 includes: determining a third time domain resource; determining a second time domain offset based on the first frequency domain resource and the second frequency domain resource; and determining the first time domain resource based on the second time domain offset and the third time domain resource. The third time domain resource is determined based on the period length, the period index, and the second time domain resource, and the second time domain resource may be a time domain resource for sending the reference signal in the 1st period. In an example, the second time domain resource may also be determined based on a configuration parameter. The configuration parameter is configured by a device higher layer or configured by a network side. The configuration parameter is, for example, a start time domain position for sending the reference signal. The second time domain offset indicates a time domain offset between the first time domain resource and the third time domain resource.

The third time domain resource may be a time domain resource determined when the reference signal is sent at equal time intervals (that is, based on a basic pattern). For example, if the period index is 3, a time point corresponding to a time domain position for sending the reference signal in the 1st period is t, and the period length is T, a time point corresponding to the third time domain resource is t+3T. For another example, the third time domain resource may be directly obtained in a form of a parameter set. For example, {2, 5, 8, 11, 14} indicates that time domain resource positions respectively corresponding to period indexes 0 to 4 are 2, 5, 8, 11, and 14. If the period index is 3 in this case, the corresponding third time domain resource is 11. A value in the parameter set herein may indicate a slot index, a symbol index, or the like. For example, the corresponding third time domain resource is 11, indicating that the corresponding third time domain resource is an 11th slot. This is not limited in this application. In some embodiments, the third time domain resource may be indicated by using a symbol, a slot, another time domain unit, an index of a time domain resource, or the like.

For example, the determining the second time domain offset based on the first frequency domain resource and the second frequency domain resource may be that a frequency corresponding to the first frequency domain resource is greater than or equal to a frequency corresponding to the second frequency domain resource, and the second time domain offset is less than or equal to 0; or a frequency corresponding to the first frequency domain resource is less than a frequency corresponding to the second frequency domain resource, and the second time domain offset is greater than 0.

For example, the determining the second time domain offset based on the first frequency domain resource and the second frequency domain resource may be determining a second time domain offset value based on the first frequency domain resource, the second frequency domain resource, the period length, and the period index; and determining the second time domain offset based on the second time domain offset value.

The second time domain offset value offset2 satisfies the following formula:

$$\text{offset2} = \frac{f - f'}{f'} mT$$

where *f'* is the frequency corresponding to the first frequency domain resource, *f* is the frequency corresponding to the second frequency domain resource, *m* is the period index, *m* = 0 indicates that the current period is the 1st period, and *T* is the period length.

In some examples, the first time domain offset value or the second time domain offset value may be determined based on a mapping relationship between the first frequency domain resource, the second frequency domain resource, the period length, and the period index. For example, the mapping relationship is determined in a form of a table or in a form of a formula. The table or the formula may be stored in the transmitting end device or the receiving end device, and the table or the formula is obtained when a time domain offset value needs to be calculated.

It should be understood that the foregoing examples are merely examples, and should not constitute an inappropriate limitation on this application. In some embodiments, a unit of the period length may be another time unit such as µs, and the period length may alternatively be indicated by using a quantity of symbols, a quantity of slots, a quantity of other time domain units or time domain resources, or the like. Similarly, a time domain offset may also be indicated by using a quantity of symbols, a quantity of slots, a quantity of other time domain units or time domain resources, or the like. Any parameter that can implement a parameter function in the formula should be considered to fall within the protection scope of this application.

It should be further understood that, in this embodiment of this application, the frequency corresponding to the first frequency domain resource/the frequency corresponding to the second frequency domain resource/a frequency corresponding to the candidate frequency domain resource may be a highest frequency, a lowest frequency, a center frequency, or a frequency at another agreed position of the frequency domain resource, or may be an average value of frequencies. This is not limited in this application, provided that standards of frequencies corresponding to all frequency domain resources are unified, and accurate correspondences in embodiments of this application can be implemented.

The determining the first frequency domain resource from the plurality of candidate frequency domain resources may be selecting the first frequency domain resource from the plurality of candidate frequency domain resources based on a service priority, or may be selecting the first frequency domain resource from the plurality of candidate frequency domain resources depending on whether a resource collision may occur.

Although there are a plurality of candidate frequency domain resources for a frequency domain resource for sending the reference signal in each period, the reference signal does not necessarily need to be sent on all the candidate frequency domain resources in each period. In a possible embodiment, after the reference signal is successfully sent on a first frequency domain resource in a plurality of candidate frequency domain resources in a current period, sending of the reference signal on another frequency domain resource in the plurality of candidate frequency domain resources is stopped. After it is determined that the reference signal can be successfully sent, stopping sending the reference signal on another resource can save resources and reduce power consumption. Correspondingly, after successfully receiving the reference signal on the first frequency domain resource in the plurality of candidate frequency domain resources in the current period, the receiving end device may stop receiving the reference signal on another frequency domain resource in the plurality of candidate frequency domain resources. After it is determined that the reference signal can be successfully received, stopping receiving the reference signal on another frequency domain resource can save resources and reduce power consumption.

For the unlicensed spectrum, LBT may be performed before sending, and channel access is performed after the LBT succeeds.

In a possible embodiment, after LBT on the first frequency domain resource in the plurality of candidate frequency domain resources in the current period succeeds, LBT on another frequency domain resource in the plurality of candidate frequency domain resources is stopped. After it is determined that the reference signal can be successfully sent, stopping LBT on another resource can save resources and reduce power consumption. When there are a plurality of first frequency domain resources, the receiving end device may select to receive a reference signal with a high signal-to-noise ratio for processing, or perform joint processing. This helps ensure quality of a sensing result.

In another possible embodiment, after LBT is successfully performed on several resources in the plurality of candidate resources in the current period, LBT may continue to be performed on several other candidate frequency domain resources. After a specific quantity requirement is met, the LBT on the other candidate frequency domain resources is stopped, and on a candidate frequency domain resource on which LBT is successfully performed, a frequency domain resource with a low interference ratio is selected to send the reference signal. The transmitting end device can ensure sending quality of the reference signal when LBT on the plurality of candidate frequency domain resources succeeds.

In a possible implementation solution, a plurality of corresponding candidate time domain resources may be first determined based on the plurality of candidate frequency domain resources, LBT may be performed on a plurality of candidate time-frequency resources, and the first frequency domain resource and the first time domain resource are determined based on a result of the LBT. For example, a frequency domain resource of a time-frequency resource on which the LBT succeeds is determined as the first frequency domain resource. For example, LBT may be performed on a time domain resource that is several symbols ahead of each candidate time-frequency resource. The foregoing examples are merely examples, and a specific manner of performing LBT is not limited. Any manner that meets a regulation and/or a protocol specification is considered to fall within the scope covered by embodiments of this application.

In this embodiment of this application, the candidate time-frequency resource may also be referred to as a candidate resource, and the candidate time-frequency resource may be a combination of each of the plurality of candidate frequency domain resources and a time domain resource corresponding to the candidate frequency domain resource.

A difference between frequencies corresponding to any two of the plurality of candidate frequency domain resources may be greater than a first threshold.

It should be understood that a difference between frequencies corresponding to two adjacent candidate frequency domain resources is greater than the first threshold, so that a sending success rate can be increased. Specifically, for example, on the unlicensed spectrum, the transmitting end device usually performs channel monitoring by using one LBT channel as granularity. A close distance between two adjacent candidate frequency domain resources means that the two candidate frequency domain resources may be located on a same LBT channel. If LBT fails on the LBT channel, the reference signal cannot be sent on either of the two candidate frequency domain resources.

Optionally, the plurality of candidate frequency domain resources may include the second frequency domain resource.

The second frequency domain resource may also be referred to as a basic frequency domain resource or a benchmark frequency domain resource. This is not limited in this application.

Optionally, the plurality of candidate frequency domain resources may not include the second frequency domain resource. For example, the plurality of candidate frequency domain resources are candidates when sending on the second frequency domain resource fails or may fail. For example, it is learned in advance that another high-priority service exists on the second frequency domain resource in a subsequent period, or it is sensed through LBT that the second frequency domain resource is occupied, or the second frequency domain resource in the subsequent period is reserved by another device. In this case, the plurality of candidate frequency domain resources may not include the second frequency domain resource.

Optionally, in each period, the first frequency domain resource may be different from the second frequency domain resource. The first frequency domain resource may include the second frequency domain resource, or may be the second frequency domain resource, or may not include the second frequency domain resource.

According to the foregoing embodiment, the second time domain offset value offset $2 = \frac{f - f'}{f'} mT$ may be obtained, that is, the second time domain offset value offset2 may be determined based on the frequency $f'$ corresponding to the first frequency domain resource, the frequency $f$ corresponding to the second frequency domain resource, the period index m, and the period length T. Sometimes, the second time domain offset value offset2 cannot exactly correspond to a time domain resource after calculation, and a time domain offset corresponding to an adjacent time domain resource may be used. For example, a result obtained through calculation may be rounded, for example, rounded up or rounded down.

In this embodiment of this application, accurate time domain compensation is performed, through parameter calculation, on a measurement error caused by sending the reference signal on different frequency domain resources, to implement accurate sensing on the different frequency domain resources, and ensure that sending the reference signal on the different frequency domain resources in each period can have an equivalent effect to sending the reference signal at equal time intervals on a same frequency domain resource.

It can be learned from the foregoing embodiment that a larger period index indicates a larger second time domain offset value. To ensure accuracy, a specific constraint may be imposed on the second time domain offset value in each period, that is, the second time domain offset for sending the reference signal is less than a second threshold, so that the time domain offset is not excessively large. In an example, the second time domain offset is less than the period length, so that a time domain resource for sending the reference signal in the current period is at least not earlier than a time domain resource that should be for sending the reference signal in a previous period.

Alternatively, the second threshold may be another value, for example, 60 OFDM symbols or five slots. Selecting these thresholds may also increase a sampling uniformity degree, to improve reliability of a sensing result.

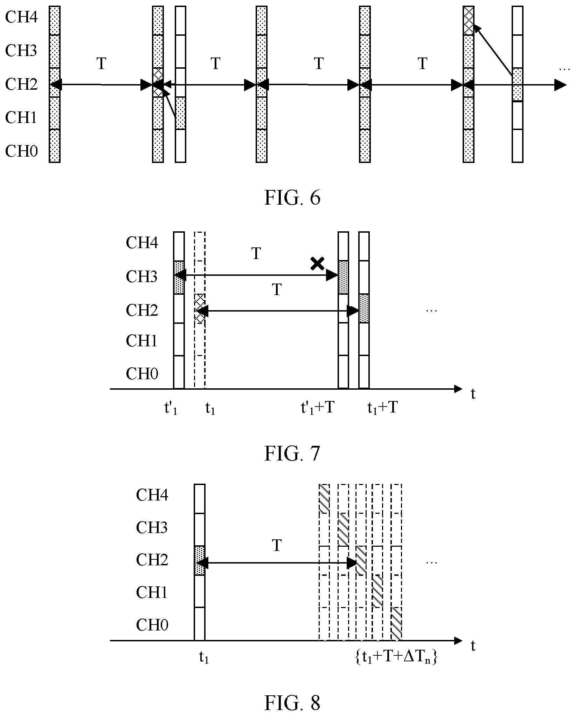

With reference to FIG. 6, the following describes a scenario in which a large-bandwidth reference signal is sent for sensing.

Based on a signal transmission method shown in FIG. 6, when a plurality of targets are simultaneously sensed, a signal that occupies a large bandwidth may need to be sent. However, on the unlicensed spectrum, LBT may be performed by using a small bandwidth as granularity. For example, a bandwidth of a reference signal is 100 MHz, an LBT bandwidth is 20 MHz, and one reference signal occupies five LBT channels CH0, CH1, CH2, CH3, and CH4 in total. If a large-bandwidth signal can be sent only when all LBT channels are detected to be in an idle state each time, a probability of sending the reference signal is greatly reduced. Therefore, in each period, sending of the reference signal may be avoided only on a channel on which the LBT fails, and the reference signal is still sent on another channel on which the LBT succeeds. For example, in a 2nd period and a 5th period in FIG. 6, to replace the reference signal that is not sent on the channel on which the LBT fails, the reference signal may be sent on a corresponding candidate resource, and the reference signal is sent by jumping to another LBT channel at another time point. In other words, a reference signal on each LBT channel in each period also corresponds to a plurality of candidate resource positions, to greatly increase the probability of sending the reference signal.

Optionally, the network device configures a parameter, and notifies the transmitting end device. In this way, the transmitting end device can determine the first frequency domain resource and the first time domain resource based on the configuration parameter. In this scenario, optionally, as shown in FIG. 3, in scenario 1, the method 300 may further include step 3011.

3011: The network device sends first indication information to the transmitting end device.

Correspondingly, the transmitting end device receives the first indication information.

The transmitting end device receives the first indication information, and determines, based on the first indication information, the first frequency domain resource and the first time domain resource for sending the reference signal.

In some cases, the transmitting end device has autonomy, and the transmitting end device may autonomously determine a parameter and select the first frequency domain resource and the first time domain resource. Some terminal devices may also configure a resource for another device by using the first indication information. In this case, an apparatus for sending the first indication information is not necessarily the network device, or may be a terminal device.

When the transmitting end device is the network device, even if the transmitting end device does not receive the first indication message, the transmitting end device may autonomously determine the parameter and select the first frequency domain resource and the first time domain resource.

In a possible embodiment, the network device may send the first indication information to indicate one or more of the plurality of candidate frequency domain resources, the period length, and the second frequency domain resource. The transmitting end device determines the first frequency domain resource and the first time domain resource based on one or more of the plurality of candidate frequency domain resources, the period length, and the second frequency domain resource that are indicated by the first indication information.

In an example, the network device may indicate the plurality of candidate frequency domain resources by using the first indication information, and the transmitting end device may autonomously determine the first frequency domain resource and the first time domain resource.

In another example, the network device may indicate the period length by using the first indication information, and the transmitting end device may select the second frequency domain resource from the plurality of candidate frequency domain resources, and autonomously determine the first frequency domain resource and the first time domain resource.

Alternatively, the network device may indicate the plurality of candidate frequency domain resources, the period length, and the second frequency domain resource by using the first indication information. The transmitting end device may accurately determine the first frequency domain resource and the first time domain resource based on the plurality of candidate frequency domain resources, the period length, and the second frequency domain resource, as well as the period index that is autonomously determined when sending the reference signal.

The foregoing examples are merely examples, and are used for describing a case in which indicating one or more of the plurality of candidate frequency domain resources, the period length, and the second frequency domain resource by the first indication information can implement a process in which the transmitting end device determines the first frequency domain resource and the first time domain resource. A plurality of combinations included in the first indication information fall within the protection scope of this application.

As the transmitting end device has a plurality of candidate time-frequency resources on which the reference signal may be sent in each period, the receiving end device needs to know positions of these candidate time-frequency resources, so as to receive the reference signal. In scenario 1, optionally, the method 300 may further include step 3012.

3012: The network device sends the first indication information to the receiving end device.

Correspondingly, the receiving end device receives the first indication information.

The receiving end device receives the first indication information, and determines, based on the first indication information, the first frequency domain resource and the first time domain resource for receiving the reference signal.

In some embodiments, when the receiving end device is the network device, even if the receiving end device does not receive the first indication message, the receiving end device may autonomously determine the parameter and determine the first frequency domain resource and the first time domain resource.

In some embodiments, when the transmitting end device and the receiving end device are a same device, the first indication information may not be sent to the receiving end device.

In some cases, a plurality of candidate frequency domain resources used by the receiving end device to receive the reference signal are defined in a protocol, and the receiving end device may autonomously determine the first frequency domain resource and the first time domain resource. Some terminal devices may also configure a resource for another device by using the first indication information. In this case, an apparatus for sending the first indication information is not necessarily the network device, or may be a terminal device.

For descriptions of determining, by the receiving end device, the first frequency domain resource and the first time domain resource based on the first indication information, refer to descriptions of determining, by the transmitting end device, the first frequency domain resource and the first time domain resource based on the first indication information. Details are not described herein again.

Optionally, the transmitting end device may also configure a parameter, and notifies the receiving end device. In this way, the receiving end device can determine the first frequency domain resource and the first time domain resource based on the configuration parameter. In this scenario, optionally, as shown in FIG. 3, in scenario 2, the method 300 may further include step 3021.

3021: The transmitting end device sends first indication information.

Correspondingly, the receiving end device receives the first indication information.

The transmitting end device may determine the configuration parameter based on the first indication information sent by the network device, and send the first indication information to the receiving end device, or may autonomously determine the configuration parameter, and send the first indication information to the receiving end device.

For the step in which the transmitting end device sends the first indication information, refer to step 3012. Details are not described herein again. Optionally, scenario 1 and scenario 2 may be further combined. For example, the network device sends the first indication information to the transmitting end device, and after receiving the first indication information, the transmitting end device sends the first indication information to the receiving end device.

In addition, in an SL scenario, both the transmitting end device and the receiving end device are terminal devices in this case. The reference signal is usually sent together with SCI carried on a PSCCH. The SCI indicates a transmission resource, a transmission manner, and the like of the reference signal. The SCI includes a resource reservation field. For a periodic signal, in addition to indicating a transmission resource in a current period, the SCI may further indicate a transmission resource in a next period by using the resource reservation field, so as to implement periodic resource reservation. In the SL scenario, a UE may use an autonomously selected resource allocation manner (mode 2). Before sending the signal, the UE monitors resource reservation information sent by another UE, measures a corresponding received power, and selects a resource that is not reserved by the another UE or that is reserved by the another UE but has a low received power, to avoid mutual interference caused by occupation of a same transmission resource between UEs in advance.

To reserve a resource for sending the reference signal, the transmitting end device may further send second indication information.

The second indication information is used to reserve a time domain resource and a frequency domain resource for sending the reference signal in a subsequent period.

Correspondingly, the receiving end device and another terminal device receive the second indication information.

The receiving end device may determine, based on the received second indication information, a time domain resource and a frequency domain resource that may be used by the transmitting end device for sending the reference signal in the subsequent period, to subsequently receive the reference signal.

The another terminal device may determine, based on the received second indication information, a time domain resource and a frequency domain resource that are reserved by the transmitting end device for sending the reference signal in the subsequent period, to facilitate resource selection. It may be understood that, in the SL scenario, the SCI may indicate the period length, and the another terminal device may obtain, by receiving the SCI sent by the transmitting end device, a parameter for sending the reference signal by the transmitting end device.

In some embodiments, the second indication information may be included in the SCI.

However, the reservation field in the existing mechanism may lead to a problem of inaccurate identification for a resource for sending the reference signal in the signal transmission method provided in the foregoing embodiment.

As shown in FIG. 7, a first UE originally chooses to send a reference signal on a second frequency domain resource CH2 by using a period length T as a sending period, but sends the reference signal on a first frequency domain resource CH3 at a time point $t'_1$ in a period. This is actually equivalent to sending the reference signal on the second frequency domain resource CH2 at a time point $t_1$. In this case, if another UE performs monitoring in a time window including the time point $t'_1$, SCI sent by the first UE at the time point $t'_1$ together with the reference signal on the first frequency domain resource CH3 may be detected. Based on a conventional mechanism, a time domain position corresponding to a resource, in a next period, reserved for the SCI sent at the time point $t'_1$ on the first frequency domain resource CH3 is $t'_1+T$, and a frequency domain resource is the first frequency domain resource CH3. However, a resource that is actually expected to be reserved is the second frequency domain resource CH2 at a time point $t_1+T$. In other words, a time domain resource that is expected to be reserved should be obtained based on $t_1$ and T instead of $t'_1$ and T. In particular, in this case, the time point $t_1$ or $t'_1$ may be understood as a start time point for sending the SCI and the reference signal, and a plurality of symbols may be actually occupied for sending.

According to the foregoing embodiment, $t'_1 - t_1 = \frac{f-f'}{f'} mT$ may be obtained. Therefore, in addition to the period length T for resource reservation, the SCI further needs to indicate the second frequency domain resource and the period index m, and the information may be indicated in a same field as the period length, or may be indicated in a different field.

When performing monitoring, the another UE may identify a reserved resource through the following steps. First, $t_1 = t'_1 - \frac{f-f'}{f'} mT$ is determined based on the time point $t'_1$ at which the SCI is received, a frequency of the received SCI or the frequency $f'$ corresponding to the first frequency domain resource on which the reference signal is actually sent, a resource reservation period or the period length T indicated by the SCI, the period index m, and the frequency or the basic frequency $f$ corresponding to the second frequency domain resource. Then, a reserved time domain resource in the next period is determined based on $t_1$ and T, that is, a time point corresponding to the time domain resource in the next period is $t_1 + T$, and a reserved frequency domain resource in the next period is the second frequency domain resource.

It should be understood that, compared with a frequency domain resource corresponding to a reference signal in a current period, a frequency domain resource corresponding to a reference signal in the next period may be understood as an offset of only a carrier frequency, and other frequency domain configuration parameters such as a comb tooth structure and an occupied bandwidth remain unchanged. Similarly, a frequency domain resource and a time domain resource that are reserved by the first UE in several subsequent periods may be further determined based on the foregoing process.

In a resource reservation scheme shown in FIG. 8, to increase channel access opportunities, for example, on the unlicensed spectrum, SCI may be allowed to reserve a plurality of resources in a next period, for example, a sensing service priority is high. In this case, the SCI may further indicate a plurality of frequency domain resources in the plurality of candidate frequency domain resources.

In an embodiment, each candidate frequency domain resource may be indicated by an offset between the candidate frequency domain resource and a basic frequency domain resource. A step of calculating a time domain resource $\{t_1+T+\Delta T_n\}$ on several frequency domain resources in the plurality of candidate frequency domain resources may be added to the foregoing step of identifying a reserved resource, where $\Delta T_n$ is a time domain offset corresponding to the plurality of frequency domain resources, so that reservation of a plurality of time domain resources and frequency domain resources in a subsequent sending period is completed.

Based on an understanding of the foregoing embodiment, a resource reservation method is provided. The first UE sends the second indication information. The second indication information is for reserving at least one frequency domain resource in the plurality of candidate frequency domain resources in the subsequent sending period.

Correspondingly, a second UE may receive the second indication information, and determine, based on the second indication information, that the first UE reserves the at least one frequency domain resource and a corresponding time domain resource for the subsequent sending period. To achieve this objective, the second indication information may indicate one or more of the at least one frequency domain resource in the plurality of candidate frequency domain resources, the second frequency domain resource, and the period index.

In a possible implementation solution, the second indication information indicates one or more of the at least one frequency domain resource in the plurality of candidate frequency domain resources, the second frequency domain resource, and the period index. For example, the second indication information indicates only the second frequency domain resource, and the second indication information may be sent together with a reference signal. Alternatively, another device may determine, based on a time domain resource and a frequency domain resource for receiving the second indication information, a time domain resource and a frequency domain resource for sending the reference signal in a current period, that is, may determine the first time domain resource and the first frequency domain resource; and then may determine, based on the first frequency domain resource, the second frequency domain resource, the first time domain resource, and the period length, a resource used by the transmitting end device to send the reference signal in a subsequent period. A frequency domain resource in the resource used by the transmitting end device to send the reference signal in the subsequent period is the first frequency domain resource and/or the second frequency domain resource.

For example, the second indication information indicates only the period index and the second frequency domain resource. In the SL scenario, the second indication information may be sent together with the reference signal. The another device may determine, based on the time domain resource and the frequency domain resource for receiving the second indication information, the time domain resource and the frequency domain resource used by the transmitting end device to send the reference signal in the current period, that is, may determine the first time domain resource and the first frequency domain resource; and then may determine, based on the first frequency domain resource, the second frequency domain resource, the first time domain resource, the period index, and the period length, the resource used by the transmitting end device to send the reference signal in the subsequent period. The frequency domain resource in the resource used by the transmitting end device to send the reference signal in the subsequent period is the first frequency domain resource and/or the second frequency domain resource.

For example, the second indication information indicates the at least one frequency domain resource in the plurality of candidate frequency domain resources, the second frequency domain resource, and the period index. In the SL scenario, the second indication information may be sent together with the reference signal. The another device may determine, based on the time domain resource and the frequency domain resource for receiving the second indication information, the time domain resource and the frequency domain resource used by the transmitting end device to send the reference signal in the current period, that is, may determine the first time domain resource and the first frequency domain resource; and then may determine, based on the at least one frequency domain resource in the plurality of candidate frequency domain resources, the first frequency domain resource, the second frequency domain resource, the first time domain resource, the period index, and the period length, the resource used by the transmitting end device to send the reference signal in the subsequent period. The frequency domain resource in the resource used by the transmitting end device to send the reference signal in the subsequent period is the at least one frequency domain resource in the plurality of candidate frequency domain resources and/or the first frequency domain resource and/or the second frequency domain resource.

The foregoing examples are merely examples, and are used for describing a case in which indicating one or more of the at least one frequency domain resource in the plurality of candidate frequency domain resources, the second frequency domain resource, and the period index by the second indication information can implement a process of reserving the frequency domain resource and the time domain resource for subsequently sending the reference signal. A plurality of combinations included in the second indication information fall within the protection scope of this application.

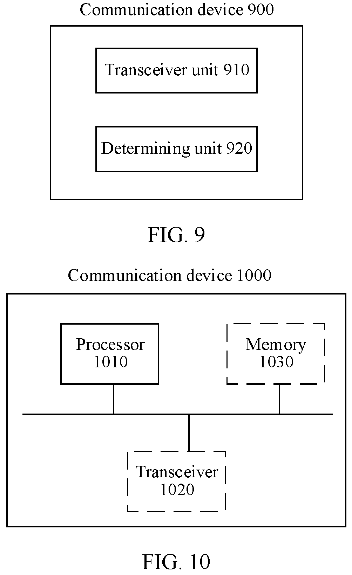

FIG. 9 is a diagram of a communication device according to an embodiment of this application.

For the communication device 900 shown in FIG. 9, the apparatus may include a transceiver unit 910 and a processing unit 920. The transceiver unit 910 may be configured to implement a corresponding communication function. The transceiver unit 910 may also be referred to as a communication interface or a communication unit. The processing unit 920 may be configured to determine a resource. Optionally, the transceiver unit 910 may include a receiving unit and a sending unit. The receiving unit is configured to implement a receiving function, and the sending unit is configured to implement a sending function.

Optionally, the communication device 900 may further include a storage unit. The storage unit may be configured to store instructions and/or data. The processing unit 920 may read the instructions and/or the data in the storage unit, to enable the device to implement the foregoing method embodiments.

In a design, the communication device 900 is configured to perform the steps or procedures performed by the device in the foregoing method embodiments, the transceiver unit 910 is configured to perform receiving- and sending-related operations in the foregoing method embodiments, and the processing unit 920 is configured to perform resource determining-related operations in the foregoing method embodiments.

It should be understood that a specific process in which the units perform the foregoing corresponding steps is described in detail in the foregoing method embodiments, and for brevity, details are not described herein.

It should be further understood that the communication device 900 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication device 900 may be specifically the device (for example, the terminal device; for another example, the network device) in the foregoing embodiments, and may be configured to perform the procedures and/or steps corresponding to the device in the foregoing method embodiments. To avoid repetition, details are not described herein again.

The communication device 900 in the foregoing solutions has functions of implementing corresponding steps performed by the device (for example, the terminal device; for another example, the network device) in the foregoing methods. The functions may be implemented by hardware, or may be implemented by executing corresponding software by hardware. The hardware or the software includes one or more modules corresponding to the foregoing functions. For example, the transceiver unit may be replaced by a transceiver (for example, a sending unit in the transceiver unit may be replaced by a sending machine, and a receiving unit in the transceiver unit may be replaced by a receiving machine); and another unit, for example, a determining unit, may be replaced by a processor, to separately perform receiving-sending operations and a related determining operation in the method embodiments.

In addition, the foregoing transceiver unit 910 may alternatively be a transceiver circuit (for example, may include a receiving circuit and a sending circuit), and the determining unit may be a processing circuit.

It should be noted that, the communication device 900 in FIG. 9 may be the device in the foregoing embodiments, or may be a chip or a chip system, for example, a system-on-a-chip (system-on-a-chip, SoC). The transceiver unit may be an input/output circuit or a communication interface. The determining unit is a processor, a microprocessor, or an integrated circuit integrated on the chip. This is not limited herein.

FIG. 10 is a diagram of a communication apparatus according to an embodiment of this application.

For the apparatus 1000 shown in FIG. 10, the communication apparatus 1000 may include a processor 1010.

Optionally, as shown in FIG. 10, the apparatus 1000 further includes a transceiver 1020, and the transceiver 1020 is configured to receive and/or send a signal. For example, the processor 1010 is configured to control the transceiver 1020 to receive and/or send the signal. Optionally, the transceiver 1020 may include a receiver and a transmitter. The receiver is configured to receive the signal, and the transmitter is configured to send the signal.

The processor 1010 may be coupled to a memory 1030. The memory 1030 is configured to store a computer program or instructions and/or data. The processor 1010 is configured to execute the computer program or the instructions stored in the memory 1030, or read the data stored in the memory 1030, to perform the method in the foregoing method embodiments.

Optionally, there are one or more processors 1010.

Optionally, there are one or more memories 1030.

Optionally, the memory 1030 and the processor 1010 are integrated together, or are disposed separately.

In an example, the processor 1010 may have a function of the processing unit 920 shown in FIG. 9, the memory 1030 may have a function of the storage unit, and the transceiver 1020 may have a function of the transceiver unit 910 shown in FIG. 9.

In a solution, the apparatus 1000 is configured to implement operations performed by the device (for example, the terminal device; for another example, the network device) in the foregoing method embodiments.

For example, the processor 1010 is configured to execute the computer program or the instructions stored in the memory 1030, to implement related operations of the device (for example, the terminal device; for another example, the network device) in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms as follows, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

The apparatus in FIG. 10 may be the device in the foregoing embodiments, or may be a chip or a chip system, for example, a system-on-a-chip (system-on-a-chip, SoC). The transceiver may be an input/output circuit or a communication interface. The processor is a processor, a microprocessor, or an integrated circuit integrated on the chip. This is not limited herein.

It should further be noted that the memory described in this specification is intended to include, but is not limited to, these memories and any other appropriate type of memory.

When the apparatus is a chip system (also referred to as a processing system), the apparatus may include a logic circuit and an input/output interface (input/output interface).

The logic circuit may be a processing circuit in the chip system. The logic circuit may be coupled and connected to a storage unit, and invoke instructions in the storage unit, so that the chip system can implement the methods and functions in embodiments of this application. The input/output interface may be an input/output circuit in the chip system, and outputs information processed by the chip system, or inputs to-be-processed data or signaling information to the chip system for processing.

An embodiment of this application further provides a computer-readable storage medium. The computer-readable storage medium stores computer program instructions used to implement the methods performed by the device (for example, the transmitting end device; for another example, the receiving end device) in the foregoing method embodiments.

For example, when the computer program instructions are executed by a computer, the computer is caused to implement the methods performed by the device (for example, the terminal device; for another example, the network device) in the foregoing method embodiments.

An embodiment of this application further provides a computer program product, including program instructions. When the program instructions are executed by a computer, the methods performed by the device (for example, the terminal device; for another example, the network device) in the foregoing method embodiments are implemented.

An embodiment of this application further provides a communication system. The communication system includes the terminal device (for example, the first terminal device and/or the second terminal device) and/or the network device in the foregoing embodiments.

For explanations and beneficial effect of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In several embodiments provided in this application, it should be understood that the disclosed system, apparatuses, and methods may be implemented in other manners. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts displayed as units may or may not be physical units, in other words, may be located at one position, or may be distributed on a plurality of network units. Some or all of the units may be selected based on actual requirements to achieve the objectives of the solutions of embodiments.

In addition, functional units in embodiments of this application may be integrated into one determining unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the field, or the part of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, wherein the method comprises:

    determining a first time domain resource based on a first frequency domain resource, a second frequency domain resource, a period length, and a period index, wherein the first frequency domain resource is selected from a plurality of candidate frequency domain resources, and the second frequency domain resource is a frequency domain resource for sending the reference signal in a first period or a frequency domain resource determined based on a configuration parameter; and

sending the reference signal on the first frequency domain resource and the first time domain resource.

2. The method according to claim 1, wherein the determining the first time domain resource based on the first frequency domain resource, the second frequency domain resource, the period length, and the period index comprises:

determining a first time domain offset based on the first frequency domain resource, the second frequency domain resource, the period length, and the period index, wherein a first time domain offset indicates a time domain offset between the first time domain resource and a second time domain resource, and the second time domain resource is a time domain resource for sending the reference signal in the first period; and

determining a first time domain resource based on the first time domain offset and the second time domain resource.

3. The method according to claim 2, wherein the determining the first time domain offset based on the first frequency domain resource, the second frequency domain resource, the period length, and the period index comprises:

determining a first time domain offset value based on the first frequency domain resource, the second frequency domain resource, the period length, and the period index; and

determining the first time domain offset based on the first time domain offset value, wherein

the first time domain offset value offset1 satisfies the following formula:

$$\text{offset1} = \frac{f}{f'} mT$$

wherein $f'$ is a frequency corresponding to the first frequency domain resource, $f$ is a frequency corresponding to the second frequency domain resource, $m$ is the period index, and $T$ is the period length.

4. The method according to claim 1, wherein the determining the first time domain resource based on the first frequency domain resource, the second frequency domain resource, the period length, and the period index comprises:

determining a third time domain resource, wherein the third time domain resource is determined based on the period length, the period index, and a second time domain resource, and the second time domain resource is a time domain resource for sending the reference signal in the first period;

determining a second time domain offset based on the first frequency domain resource and the second frequency domain resource, wherein the second time domain offset indicates a time domain offset between the first time domain resource and the third time domain resource; and

determining a first time domain resource based on the second time domain offset and the third time domain resource.

5. The method according to claim 4, wherein the determining the second time domain offset based on the first frequency domain resource and the second frequency domain resource comprises:

a frequency corresponding to a first frequency domain resource is greater than or equal to a frequency corresponding to a second frequency domain resource, and a second time domain offset is less than or equal to 0; or

a frequency corresponding to a first frequency domain resource is less than a frequency corresponding to a second frequency domain resource, and a second time domain offset is greater than 0.

6. The method according to claim 4 or 5, wherein the determining the second time domain offset based on the first frequency domain resource and the second frequency domain resource comprises:

determining a second time domain offset value based on the first frequency domain resource, the second frequency domain resource, the period length, and the period index; and

determining the second time domain offset based on the second time domain offset value, wherein

the second time domain offset value offset2 satisfies the following formula:

$$\text{offset2} = \frac{f - f'}{f'} mT$$

wherein $f'$ is the frequency corresponding to the first frequency domain resource, $f$ is the frequency corresponding to the second frequency domain resource, $m$ is the period index, and $T$ is the period length.

7. The method according to claim 5 or 6, wherein the second time domain offset is less than the period length.

8. The method according to any one of claims 1 to 7, wherein the method further comprises:
receiving first indication information, wherein the first indication information indicates one or more of the plurality of candidate frequency domain resources, the period length, or the second frequency domain resource.

9. The method according to any one of claims 1 to 8, wherein the method further comprises:
sending second indication information, wherein the second indication information indicates one or more of at least one frequency domain resource in the plurality of candidate frequency domain resources, the second frequency domain resource, and the period index.

10. The method according to any one of claims 1 to 9, wherein the method further comprises:

performing listen before talk LBT; and
determine the first frequency domain resource from the plurality of candidate frequency domain resources based on a result of the LBT.

11. The method according to any one of claims 1 to 10, wherein the first frequency domain resource is different from the second frequency domain resource.

12. The method according to any one of claims 1 to 11, wherein a difference between frequencies corresponding to any two of the plurality of candidate frequency domain resources is greater than a first threshold.

13. A signal transmission method, wherein the method comprises:

determining a first time domain resource based on a first frequency domain resource, a second frequency domain resource, a period length, and a period index, wherein the first frequency domain resource is selected from a plurality of candidate frequency domain resources, and the second frequency domain resource is a frequency domain resource for receiving the reference signal in a first period or a frequency domain resource determined based on a configuration parameter; and
receiving the reference signal on the first frequency domain resource and the first time domain resource.

14. The method according to claim 13, wherein the determining the first time domain resource based on the first frequency domain resource, the second frequency domain resource, the period length, and the period index comprises:

determining a first time domain offset based on the first frequency domain resource, the second frequency domain resource, the period length, and the period index, wherein a first time domain offset indicates a time domain offset between the first time domain resource and a second time domain resource, and the second time domain resource is a time domain resource for receiving the reference signal in the first period; and
determining a first time domain resource based on the first time domain offset and the second time domain resource.

15. The method according to claim 14, wherein the determining the first time domain offset based on the first frequency domain resource, the second frequency domain resource, the period length, and the period index comprises:

determining a first time domain offset value based on the first frequency domain resource, the second frequency domain resource, the period length, and the period index; and
determining the first time domain offset based on the first time domain offset value, wherein
the first time domain offset value offset1 satisfies the following formula:

$$\text{offset1} = \frac{f}{f'}mT$$

wherein $f'$ is a frequency corresponding to the first frequency domain resource, $f$ is a frequency corresponding to the second frequency domain resource, $m$ is the period index, and $T$ is the period length.

16. The method according to claim 13, wherein the determining the first time domain resource based on the first frequency domain resource, the second frequency domain resource, the period length, and the period index comprises:

determining a third time domain resource, wherein the third time domain resource is determined based on the period length, the period index, and a second time domain resource, and the second time domain resource is a time domain resource for receiving the reference signal in the first period;
determining a second time domain offset based on the first frequency domain resource and the second frequency domain resource, wherein the second time domain offset indicates a time domain offset between the first time domain resource and the third time domain resource; and
determining a first time domain resource based on the second time domain offset and the third time domain resource.

17. The method according to claim 16, wherein the determining the second time domain offset based on the first frequency domain resource and the second frequency domain resource comprises:

a frequency corresponding to a first frequency domain resource is greater than or equal to a frequency corresponding to a second frequency domain resource, and a second time domain offset is less than or equal to 0; or
a frequency corresponding to a first frequency domain resource is less than a frequency corresponding to a second frequency domain resource, and a second time domain offset is greater than 0.

18. The method according to claim 16 or 17, wherein the determining the second time domain offset based on the first frequency domain resource and the second frequency domain resource comprises:

determining a second time domain offset value based on the first frequency domain resource, the second frequency domain resource, the period length, and the period index; and
determining the second time domain offset based on the second time domain offset value, wherein
the second time domain offset value offset2 satisfies the following formula:

$$\text{offset2} = \frac{f - f'}{f'}mT$$

wherein $f'$ is the frequency corresponding to the first frequency domain resource, $f$ is the frequency corresponding to the second frequency domain resource, $m$ is the period index, and $T$ is the period length.

19. The method according to any one of claims 16 to 18, wherein the second time domain offset is less than the period length.

20. The method according to any one of claims 13 to 19, wherein the method further comprises:
receiving first indication information, wherein the first indication information indicates one or more of the plurality of candidate frequency domain resources, the period length, or the second frequency domain resource.

21. The method according to any one of claims 13 to 19, wherein the method further comprises:
receiving second indication information, wherein the second indication information indicates one or more of at least one frequency domain resource in the plurality of candidate frequency domain resources, the second frequency domain resource, and the period index.

22. The method according to any one of claims 13 to 21, wherein the first frequency domain resource is different from the second frequency domain resource.

23. The method according to any one of claims 13 to 22, wherein a difference between frequencies corresponding to any two of the plurality of candidate frequency domain resources is greater than a first threshold.

24. A communication apparatus, wherein the apparatus comprises:

   a processor, wherein
   the processor is configured to perform the method according to any one of claims 1 to 12 or the method according to any one of claims 13 to 23.

25. A computer-readable storage medium, wherein the computer-readable storage medium stores program instructions, and the program instructions are read by a processor, to perform the method according to any one of claims 1 to 12 or the method according to any one of claims 13 to 23.

26. A computer program product, wherein when the computer program product runs on a computer, the computer is caused to perform the method according to any one of claims 1 to 12 or the method according to any one of claims 13 to 23.

FIG. 1

(a)

(b)

FIG. 2

300

| Transmitting end device | Network device | Receiving end device |

Scenario 1

3011: Send first indication
information

3012: Send the first
indication information

Scenario 2

3021: Send first indication information

310: Determine a first time
domain resource based on a
first frequency domain
resource, a second frequency
domain resource, a period
length, and a period index

320: Send a
reference signal

FIG. 3

(a)

(b)

FIG. 4

FIG. 5

FIG. 6

FIG. 7

FIG. 8

Communication device 900

Transceiver unit 910

Determining unit 920

FIG. 9

Communication device 1000

Processor
1010

Memory
1030

Transceiver
1020

FIG. 10

## INTERNATIONAL SEARCH REPORT

| International application No. |
| --- |
| **PCT/CN2025/071695** |

**A.     CLASSIFICATION OF SUBJECT MATTER**

H04L 5/00(2006.01)i

According to International Patent Classification (IPC) or to both national classification and IPC

**B.     FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CNKI, ENTXT, WPABS, 3GPP: 参考信号, 频域, 时域, 周期, 长度, 时长, 索引, reference signal, RS, CRS, DMRS, PRS, PTRS, TRS, SRS, frequency domain, time domain, period, duration, length, index, indices

**C.     DOCUMENTS CONSIDERED TO BE RELEVANT**

| Category* | Citation of document, with indication, where appropriate, of the relevant passages | Relevant to claim No. |
| --- | --- | --- |
| A | CN 116669196 A (HUAWEI TECHNOLOGIES CO., LTD.) 29 August 2023 (2023-08-29) entire document | 1-26 |
| A | CN 112423391 A (HUAWEI TECHNOLOGIES CO., LTD.) 26 February 2021 (2021-02-26) entire document | 1-26 |
| A | CN 110800351 A (GUANGDONG OPPO MOBILE TELECOMMUNICATIONS CORP., LTD.) 14 February 2020 (2020-02-14) entire document | 1-26 |
| A | US 2021360662 A1 (HUAWEI TECHNOLOGIES CO., LTD.) 18 November 2021 (2021-11-18) entire document | 1-26 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 March 2025** | **20 March 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/071695**

| Patent document cited in search report | | | Publication date (day/month/year) | Patent family member(s) | | | Publication date (day/month/year) |
|---|---|---|---|---|---|---|---|
| CN | 116669196 | A | 29 August 2023 | None | | | |
| CN | 112423391 | A | 26 February 2021 | None | | | |
| CN | 110800351 | A | 14 February 2020 | US | 2021204295 | A1 | 01 July 2021 |
| | | | | US | 11729804 | B2 | 15 August 2023 |
| | | | | BR | 112020006963 | A2 | 06 October 2020 |
| | | | | MX | 2020003774 | A | 29 July 2020 |
| | | | | TW | 201919427 | A | 16 May 2019 |
| | | | | TWI | 771508 | B | 21 July 2022 |
| | | | | CA | 3078643 | A1 | 18 April 2019 |
| | | | | CA | 3078643 | C | 19 July 2022 |
| | | | | RU | 2747269 | C1 | 04 May 2021 |
| | | | | EP | 3697145 | A1 | 19 August 2020 |
| | | | | EP | 3697145 | A4 | 16 September 2020 |
| | | | | EP | 3697145 | B1 | 04 August 2021 |
| | | | | ES | 2893788 | T3 | 10 February 2022 |
| | | | | EP | 4401493 | A1 | 17 July 2024 |
| | | | | EP | 3911084 | A1 | 17 November 2021 |
| | | | | EP | 3911084 | B1 | 26 June 2024 |
| | | | | US | 2020245337 | A1 | 30 July 2020 |
| | | | | US | 10986643 | B2 | 20 April 2021 |
| | | | | DK | 3697145 | T3 | 04 October 2021 |
| | | | | JP | 2021502727 | A | 28 January 2021 |
| | | | | JP | 7062759 | B2 | 06 May 2022 |
| | | | | KR | 20200065059 | A | 08 June 2020 |
| | | | | KR | 102526417 | B1 | 26 April 2023 |
| | | | | WO | 2019071624 | A1 | 18 April 2019 |
| | | | | AU | 2017435240 | A1 | 28 May 2020 |
| | | | | AU | 2017435240 | B2 | 17 August 2023 |
| | | | | SG | 11202003221 | SA | 28 May 2020 |
| US | 2021360662 | A1 | 18 November 2021 | WO | 2020155188 | A1 | 06 August 2020 |
| | | | | EP | 3897054 | A1 | 20 October 2021 |
| | | | | EP | 3897054 | A4 | 05 January 2022 |
| | | | | EP | 3897054 | B1 | 28 December 2022 |
| | | | | US | 11997671 | B2 | 28 May 2024 |

Form PCT/ISA/210 (patent family annex) (July 2022)

**EP 4 749 970 A1**

**Patent documents cited in the description**

- CN 202410061024